# DEMANDE DE BREVET EUROPEEN

(11) **EP 0 856 978 A1**
(43) Date de publication de la demande: **05.08.1998**
(21) Numéro de dépôt: 98400007.5
(22) Date de dépôt: 06.01.1998
(51) Int. Cl.: H04M 1/65

(54) **Terminal téléphonique et procédé de communication téléphonique entre un terminal appelant et un terminal appelé, permettant d'optimiser le coût des communications**

(30) Priorité: 09.01.1997 FR 9700139
(71) Demandeur: ALCATEL ALSTHOM COMPAGNIE GENERALE D'ELECTRICITE, 75008 Paris (FR)
(72) Inventeur: Lecomte, Daniel, 75116 Paris (FR); Coudreuse, Michel, 75006 Paris (FR)
(74) Mandataire: Scheer, Luc

(57) **Abrégé**

L'invention concerne un terminal téléphonique appelant (1) et un terminal téléphonique appelé (2), permettant d'optimiser les coûts de communication en temps réel via un premier réseau de communication (3) fonctionnant en temps réel.

Le terminal appelant comprend des moyens (5) de reconnaissance de l'état du terminal appelé (2), parmi les deux états "communication temps réel", pour un terminal appelé requérant une communication en temps réel, et "communication temps différé", pour un terminal appelé supportant une communication en temps différé et des moyens (6) pour construire et stocker temporairement un message (9) en local, puis pour l'émettre vers le terminal appelé (2) via un réseau de communication (4) fonctionnant en temps différé, lorsque l'état du terminal appelé (2) est "communication temps différé".

Le terminal appelé comprend des moyens (7) d'émission vers le terminal appelant (1) d'une signalisation d'état (11), en réponse à une détection d'appel, parmi les deux états "communication temps réel" et "communication temps différé" et des moyens (8) de réception, et éventuellement de stockage, d'un message (9) émis par le terminal appelant (1) via un second réseau de communication (4) fonctionnant en temps différé, lorsque l'état du terminal appelé (2) est "communication temps différé".

## Description

Le domaine de l'invention est celui des communications, et notamment des communications téléphoniques.

Plus précisément, l'invention concerne une nouvelle approche des terminaux téléphoniques ainsi qu'un procédé de communication entre un terminal appelant et un terminal appelé correspondant.

Actuellement, lorsque l'on veut établir une communication entre deux terminaux, on compose à l'aide d'un terminal appelant le numéro de téléphone d'un terminal appelé. Cette communication peut être téléphonique (transmission de la voix) ou multimédia (transmission de la voix et/ou d'images et/ou de données). De façon classique, le terminal appelant utilise un réseau de communication prédéterminé (en général le réseau téléphonique commuté) qui permet d'établir une communication point à point de type temps réel, de façon à permettre une réelle interactivité entre les deux correspondants.

Cette technique classique est avantageuse, en termes de convivialité notamment. En revanche, elle s'avère, dans certaines conditions, très couteuse. En effet, la communication est facturée en général au temps passé et à la distance. La durée utilisée comme base de facturation est parfois très courte, notamment lors de communications avec l'étranger. Dans cette situation, il n'est pas rare qu'une conversation revienne à plusieurs dizaines de francs.

On connaît par ailleurs des systèmes de communication moins couteux. C'est par exemple le cas du réseau INTERNET, qui ne tient pas compte de la durée ou de la distance. Classiquement une seule unité de base sur le réseau téléphonique peut permettre d'échanger des données entre l'Europe et le Japon pendant des heures.

En revanche, ce réseau est souvent peu rapide, et ne permet pas d'assurer des échanges d'information en temps réel, comme le permet le réseau téléphonique commuté. INTERNET est donc essentiellement utilisé pour le transfert des données supportant une communication en temps différé, ou à tout le moins une communication fortement ralentie.

Or, il s'avère que dans certaines situations, il n'est pas nécessaire d'établir une communication symétrique en temps réel d'un coût relativement élevé.

Ceci est par exemple le cas lorsque le terminal appelé est un télécopieur. Les inventeurs ont également remarqué que contrairement à ce qu'à toujours pensé l'homme du métier, c'est aussi le cas lorsque l'on a affaire à un répondeur/enregistreur (téléphonique, télématique ou multimédia). On pourrait alors très bien établir une communication en temps différé plutôt qu'une communication symétrique temps réel dont le coût est plus élevé.

L'invention a notamment pour objectif de pallier ces différents inconvénients de l'état de la technique, et de tirer parti de ces observations.

Plus précisément, l'un des objectifs de la présente invention est de fournir un terminal appelant, un terminal appelé, ainsi qu'un procédé correspondant de communication téléphonique entre un terminal appelant et un terminal appelé, permettant d'optimiser le coût des communications.

L'invention a également pour objectif de fournir un tel terminal appelant qui soit compatible avec les terminaux appelés actuels, et, inversement, un terminal appelé qui soit compatible avec les terminaux appelants actuels.

Ces différents objectifs, ainsi que d'autres qui apparaîtront par la suite, sont atteints selon l'invention à l'aide d'un terminal téléphonique, permettant la réalisation de communication en temps réel via un premier réseau de communication fonctionnant en temps réel, caractérisé en ce qu'il comprend, en tant que terminal appelant :
- des moyens de reconnaissance de l'état d'un terminal appelé, parmi les deux états "communication temps réel", pour un terminal appelé requérant une communication en temps réel, et "communication temps différé", pour un terminal appelé supportant une communication en temps différé ; et
- des moyens pour construire et stocker temporairement un message en local, puis pour l'émettre vers ledit terminal appelé via un second réseau de communication fonctionnant en temps différé, lorsque l'état dudit terminal appelé est "communication temps différé".

Lorsque cela est possible (c'est-à-dire lorsque le terminal appelé lui indique qu'il se trouve dans l'état "communication temps différé", par exemple parce qu'un répondeur est en fonction), le terminal appelant de l'invention utilise donc un second réseau de communication fonctionnant en temps différé pour transmettre un message au terminal appelé. Ainsi, le coût de la communication est réduit puisque le second réseau fonctionnant en temps différé est moins coûteux que le premier réseau de communication fonctionnant en temps réel.

Dans ce cas, selon l'approche nouvelle de l'invention, le message à transmettre au terminal appelé n'est pas transmis au fur et à mesure de sa réalisation. Au contraire, il est construit, mis en forme, et éventuellement compensé en local, avant d'être transmis.

Outre le gain en temps de communication, cela représente l'avantage de permettre de construire un message de bonne qualité. Par exemple, si le terminal appelé est un répondeur, on pourra réfléchir au contenu du message, éventuellement le recommencer... On comprend que cela est encore plus vrai lorsque le message est complexe (son, image, données...).

Par fonctionnement en temps différé (ou "non temps réel"), on entend ici soit un vrai fonctionnement en temps différé (le message du terminal appelant n'est pas envoyé immédiatement au terminal appelé), soit un fonctionnement "ralenti" (le message du terminal appelant est envoyé presqu'en temps réel au terminal appelé, mais en tout état de cause moins rapidement que s'il l'était sur le premier réseau fonctionnant en temps réel).

Il est à noter que le terminal appelant de l'invention est compatible avec un terminal appelé classique. En effet, si le terminal appelant de l'invention ne reçoit aucune signalisation d'état du terminal appelé classique, il en déduit que celui-ci n'est joignable que via le premier réseau de communication fonctionnant en temps réel.

Il est clair cependant que le coût des communication ne peut être réduit que si le terminal appelant et le terminal appelé sont tous les deux réalisés selon la présente invention.

L'invention concerne également un terminal téléphonique permettant la réalisation de communication en temps réel via un premier réseau de communication fonctionnant en temps réel, caractérisé en ce qu'il comprend, en tant que terminal appelé :
- des moyens d'émission vers un terminal appelant d'une signalisation d'état, en réponse à une détection d'appel, parmi les deux états "communication temps réel", pour un terminal appelé requérant une communication en temps réel, et "communication temps différé", pour un terminal appelé supportant une communication en temps différé ; et
- des moyens de réception, et éventuellement de stockage, d'un message émis par ledit terminal appelant via un second réseau de communication fonctionnant en temps différé, lorsque l'état dudit terminal appelé est "communication temps différé".

Le terminal appelé de l'invention indique donc au terminal appelant, en lui transmettant une signalisation d'état, via quel réseau (temps réel ou temps différé) il est préférablement joignable. En d'autres termes, le terminal appelé de l'invention indique au terminal appelant s'il est ou non joignable via le second réseau fonctionnant en temps différé.

Par signalisation d'état, on entend par exemple soit une donnée (par exemple un ou plusieurs éléments binaires (ou bits) d'état), soit un signal audio (par exemple la porteuse d'un modem ou d'un fax, ou tout autre signal audio prédéterminé).

A nouveau, il est à noter que le terminal appelé de l'invention est compatible avec un terminal appelant classique. En effet, pour un terminal appelant classique, qui ne comprend pas la signalisation d'état qui lui est envoyée, le terminal appelé de l'invention reste joignable par le premier réseau de communication fonctionnant en temps réel.

Il est clair par ailleurs qu'un même terminal peut comprendre les moyens propres au terminal appelant de l'invention et/ou ceux propres au terminal appelé de l'invention. Cela devrait d'ailleurs être le cas de la plupart des terminaux haut de gamme, incorporant plusieurs fonctions (terminaux multimédias par exemple).

De façon avantageuse, ledit premier réseau de communication est un réseau téléphonique commuté, et ledit second réseau de communication est un réseau multimédia, de type "Internet".

Il est clair que l'on peut prévoir, pour le second réseau fonctionnant en "temps différé", d'autres types de réseaux tels que par exemple le réseau Transpac, un réseau privé, etc.

Ledit terminal peut par exemple appartenir au groupe comprenant :
- les téléphones ;
- les répondeurs/enregistreurs téléphoniques ;
- les vidéophones ;
- les répondeurs/enregistreurs vidéos ;
- les terminaux télématiques ;
- les répondeurs/enregistreurs télématiques ;
- les terminaux de type "Internet" ;
- les serveurs de type "Internet" ;
- les terminaux multifonctions interrogeables à distance.

Cette liste ne présente aucun caractère exhaustif et vise simplement à montrer la grande diversité d'application du concept de l'invention. En effet, tout type de terminal téléphonique peut convenir, dès lors qu'il peut accéder d'une part à un premier réseau de communication fonctionnant en temps réel et d'autre part à un second réseau fonctionnant en temps différé, en émission et/ou en réception.

Le message peut comprendre uniquement des informations d'une même nature (à savoir son, images ou données), ou bien un mélange d'informations de différentes natures (par exemple son et images, ou encore images et données).

Selon un mode de réalisation de l'invention, le terminal comprend des moyens pour forcer l'état dudit terminal, en tant que terminal appelé, à "communication temps différé".

De cette façon, l'utilisateur du terminal appelé décide de supporter un fonctionnement en temps différé (second réseau), dans une situation où un fonctionnement en temps réel (premier réseau) aurait été normalement adopté. Il s'agit par exemple du cas d'une communication très coûteuse avec l'étranger, où il peut paraître acceptable de supporter le temps différé.

Dans ce cas, de façon préférentielle, ledit terminal comprend des moyens pour basculer d'une communication en temps réel via le premier réseau de communication à une communication en temps différé via le second réseau, et/ou inversement.

Ainsi, par exemple, en cours de discussion à travers une communication établie sur le premier réseau, on peut basculer sur le second réseau, de façon à passer un fax ou transférer un fichier. Inversement, on peut basculer à nouveau sur le premier réseau, par exemple pour améliorer la qualité d'une conversation.

L'invention concerne également le procédé de communication téléphonique correspondant, permettant la réalisation de communication en temps réel via un premier réseau de communication fonctionnant en temps réel,
caractérisé en ce qu'il comprend les étapes suivantes :
- émission d'un signal d'appel du terminal appelant vers le terminal appelé ;
- détection du signal d'appel par le terminal appelé ;
- émission par le terminal appelé d'une signalisation d'état vers le terminal appelant, parmi les deux états "communication temps réel", pour un terminal appelé requérant une communication en temps réel, et "communication temps différé" pour un terminal appelé supportant une communication en temps différé, si le terminal appelé comprend des moyens pour distinguer lesdits états ;
- si l'état est "communication temps réel" ou si l'un desdits terminaux ne comprend pas de moyens pour distinguer lesdits états, mise en oeuvre d'une communication sur ledit premier réseau ;
- sinon :
   - construction et stockage temporaire d'un message dans ledit terminal appelant ;
   - émission dudit message vers ledit terminal appelé via un second réseau de communication fonctionnant en temps différé ;
   - réception, et éventuellement stockage, dudit message par ledit terminal appelé.

Avantageusement, ladite étape de mise en oeuvre d'une communication sur ledit premier réseau est également effectuée avant et/ou après ladite étape d'émission du message via ledit second réseau.

En d'autres termes, la possibilité de basculer d'un réseau à l'autre en cours de communication peut être prévue.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente de façon schématique un mode de réalisation particulier d'un terminal appelant et d'un terminal appelé selon l'invention, permettant d'illustrer un exemple de communication entre ces deux terminaux ; et
- la figure 2 présente un organigramme simplifié d'un mode de réalisation particulier du procédé selon l'invention de communication téléphonique entre un terminal appelant et un terminal appelé.

Dans un souci de simplification, on considère dans la suite de la description que l'un des terminaux est un terminal appelant 1 et que l'autre est un terminal appelé 2. Il est clair cependant qu'un même terminal peut constituer à la fois un terminal appelant et un terminal appelé.

L'invention n'est limitée à aucun type particulier de terminal téléphonique et peut s'appliquer dans tous les cas où un même terminal permet la réalisation de communication via deux réseaux distincts, l'un de ces réseaux fonctionnant en temps réel et l'autre en temps différé.

Ainsi, les terminaux téléphoniques de l'invention, du type appelant et/ou appelé, appartiennent par exemple à la liste (non exhaustive) suivante : un téléphone, un répondeur/enregistreur téléphonique, un vidéophone, un répondeur/enregistreur vidéo, un terminal télématique (tel qu'un Minitel (marque déposée)), un répondeur/enregistreur télématique, un terminal de type "Internet", un serveur de type "Internet", un terminal multifonctions interrogeable à distance, etc.

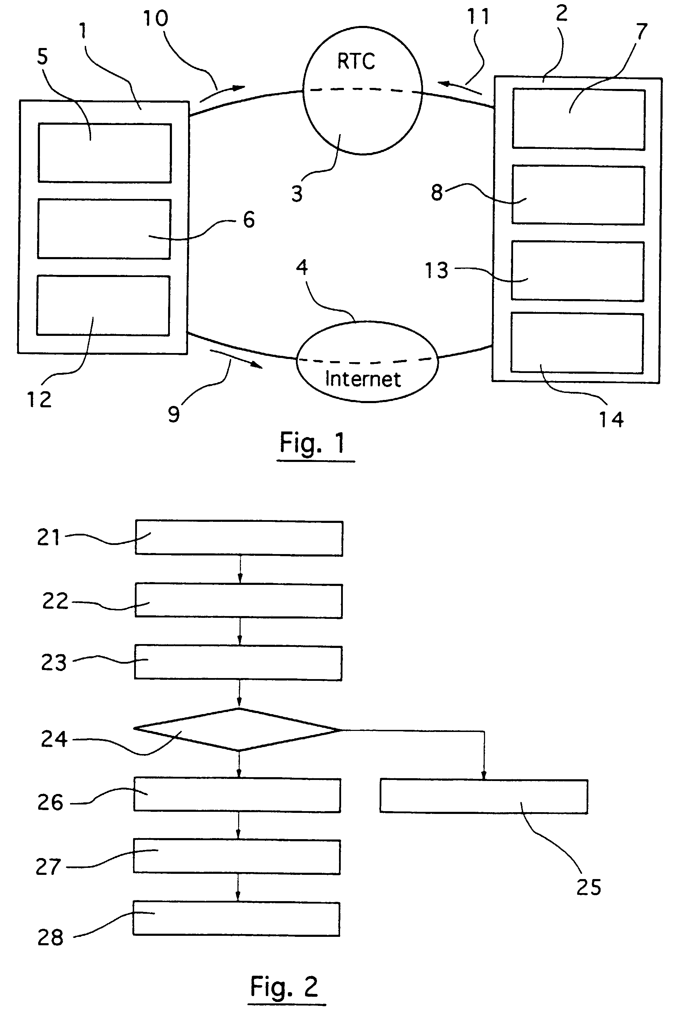

Comme présenté sur la figure 1, le terminal appelant 1 et le terminal appelé 2 sont tous les deux reliés d'une part à un premier réseau 3 fonctionnant en temps réel (par exemple le réseau téléphonique commuté, RTC) et d'autre part à un second réseau 4 fonctionnant en temps différé (par exemple un réseau multimédia de type "Internet").

D'une façon générale, le coût d'une communication via le second réseau (temps différé) 4 moins élevé que sur le premier réseau (temps réel) 3. Le principe général de l'invention consiste donc, lorsque cela est possible, à utiliser le second réseau 4 à la place du premier réseau 3. Pour cela, le terminal appelant 1 et le terminal appelé 2 comprennent chacun des moyens spécifiques.

Le terminal appelant 1 comprend notamment :
- des moyens 5 de reconnaissance de l'état d'un terminal appelé, parmi les deux états suivants :
   * "communication temps réel", pour un terminal appelé requérant une communication en temps réel, et
   * "communication temps différé", pour un terminal appelé supportant une communication en temps différé ; et
- des moyens 6 pour construire et stocker temporairement un message en local, puis pour l'émettre vers le terminal appelé 2 via le second réseau de communication 4, lorsque l'état du terminal appelé 2 est "communication temps différé".

Le message 9 que le terminal appelant 1 envoie au terminal appelé 2 via le second réseau 4 peut comprendre différents types d'informations. Par exemple, si le terminal appelé 2 est un répondeur/enregistreur téléphonique, le message 9 peut comprendre uniquement du son (message vocal). Ce message 9 peut également comprendre uniquement des données, par exemple si le terminal appelé 2 est un répondeur/enregistreur télématique. Selon encore un autre exemple, le message 9 peut comprendre du son, des images et des données, si le terminal appelé est un terminal de type Internet. D'une façon générale, le message 9 comprend du son et/ou des images et/ou des données.

Le terminal appelé 2 comprend notamment :
- des moyens 7 d'émission vers le terminal appelant 1 d'une signalisation d'état 11, en réponse à une détection d'appel (c'est-à-dire suite à la réception d'un signal d'appel 10 émis par le terminal appelant 1). Cette signalisation d'état 11 correspond à l'un des deux états précités, à savoir "communication temps réel" ou "communication temps différé" ; et
- des moyens 8 de réception, et éventuellement de stockage, d'un message 9 émis par le terminal appelant 1 via le second réseau de communication 4, lorsque l'état du terminal appelé 2 est "communication temps différé".

Le signal d'appel 10 et la signalisation d'état 11, émis par le terminal appelant 1 et le terminal appelé respectivement, transitent par exemple via le premier réseau de communication 1, dans des canaux de signalisation appropriés.

Dans le mode de réalisation présenté sur la figure 1, le terminal appelant 1 et le terminal appelé 2 comprennent chacun des moyens 12, 13 pour basculer d'une communication en temps réel via le premier réseau de communication 3 à une communication en temps différé via le second réseau 4, et/ou inversement. Ainsi, l'envoi par le terminal appelant 1 d'un message 9 au terminal appelé 2, via le second réseau 4, peut être précédé et/ou suivi d'une communication via le premier réseau 3.

Optionnellement, le terminal appelé 2 peut comprendre des moyens 14 pour forcer son état à "communication temps différé".

On présente maintenant, en relation avec l'organigramme simplifié de la figure 2, un mode de réalisation particulier du procédé selon l'invention de communication téléphonique entre un terminal appelant et un terminal appelé.

On distingue notamment les étapes suivantes :
- émission (21) d'un signal d'appel 10 du terminal appelant 1 vers le terminal appelé 2 ;
- détection (22) du signal d'appel 10 par le terminal appelé 2 ;
- émission (23) par le terminal appelé 2 d'une signalisation d'état 11 vers le terminal appelant 1, parmi les deux états "communication temps réel" "communication temps différé" ;
- distinction (24) en fonction de l'état :
   * si l'état est "communication temps réel", mise en oeuvre (25) d'une communication sur le premier réseau 3 ;
   * si l'état est "communication temps différé" :
      - construction et stockage temporaire (26) d'un message 9 dans le terminal appelant 1 ;
      - émission (27) de ce message 9 vers le terminal appelé 1 via le second réseau de communication 4 ;
      - réception (28), et éventuellement stockage, du message 9 par le terminal appelé 2.

Il convient de noter que lorsque le terminal appelant 1 de l'invention tente d'appeler un terminal appelé "classique", c'est-à-dire un terminal appelé ne distinguant pas de moyens d'émettre une signalisation d'état, le terminal appelant 1 met ici en oeuvre une communication sur le premier réseau 3. En d'autres termes, tout se passe comme si le terminal appelé classique avait émis un état "communication temps réel".

On notera que selon une variante, si le terminal appelant 1 est capable de reconnaître certains indicateurs d'état actuellement utilisés, alors le terminal appelant 1 peut se comporter comme si le terminal appelé "classique" était un terminal appelé selon l'invention.

Ainsi, par exemple, si le terminal appelé 2 est un répondeur/enregistreur téléphonique "classique", il peut émettre une porteuse particulière lorsqu'il est appelé. Si le terminal appelant 1 est capable de reconnaître cette porteuse, on peut décider que cette porteuse constitue une signalisation d'état correspondant à l'état "communication temps différé". Contrairement au cas précédent, le terminal appelant 1 met ici en oeuvre une communication sur le second réseau 4 (sans savoir a priori si le terminal appelé "classique" est joignable par le second réseau 4).

## Revendications

1. Terminal téléphonique (1), permettant la réalisation de communication en temps réel via un premier réseau de communication (3) fonctionnant en temps réel, caractérisé en ce qu'il comprend, en tant que terminal appelant :
- des moyens (5) de reconnaissance de l'état d'un terminal appelé (2), parmi les deux états "communication temps réel", pour un terminal appelé requérant une communication en temps réel, et "communication temps différé", pour un terminal appelé supportant une communication en temps différé ; et
- des moyens (6) pour construire et stocker temporairement un message (9) en local, puis pour l'émettre vers ledit terminal appelé (2) via un second réseau de communication (4) fonctionnant en temps différé, lorsque l'état dudit terminal appelé (2) est "communication temps différé".

2. Terminal téléphonique (2) permettant la réalisation de communication en temps réel via un premier réseau de communication (3) fonctionnant en temps réel, caractérisé en ce qu'il comprend, en tant que terminal appelé :
- des moyens (7) d'émission vers un terminal appelant (1) d'une signalisation d'état (11), en réponse à une détection d'appel, parmi les deux états "communication temps réel", pour un terminal appelé requérant une communication en temps réel, et "communication temps différé", pour un terminal appelé supportant une communication en temps différé ; et
- des moyens (8) de réception, et éventuellement de stockage, d'un message (9) émis par ledit terminal appelant (1) via un second réseau de communication (4) fonctionnant en temps différé, lorsque l'état dudit terminal appelé (2) est "communication temps différé".

3. Terminal selon l'une quelconque des revendications 1 et 2, caractérisé en ce que ledit premier réseau de communication (3) est un réseau téléphonique commuté.

4. Terminal selon l'une quelconque des revendications 1 à 3, caractérisé en ce que ledit second réseau de communication (4) est un réseau multimédia, de type "Internet".

5. Terminal selon l'une quelconque des revendications 1 à 4, caractérisé en ce qu'il appartient au groupe comprenant :
- les téléphones ;
- les répondeurs/enregistreurs téléphoniques ;
- les vidéophones ;
- les répondeurs/enregistreurs vidéos ;
- les terminaux télématiques ;
- les répondeurs/enregistreurs télématiques ;
- les terminaux de type "Internet";
- les serveurs de type "Internet" ;
- les terminaux multifonctions interrogeables à distance.

6. Terminal selon l'une quelconque des revendications 1 à 5, caractérisé en ce que ledit message (9) comprend du son et/ou des images et/ou des données.

7. Terminal selon l'une quelconque des revendications 1 à 6, caractérisé en ce qu'il comprend des moyens (14) pour forcer l'état dudit terminal, en tant que terminal appelé (2), à "communication temps différé".

8. Terminal selon l'une quelconque des revendications 1 à 7, caractérisé en ce qu'il comprend des moyens (12, 13) pour basculer d'une communication en temps réel via le premier réseau de communication (3) à une communication en temps différé via le second réseau (4), et/ou inversement.

9. Procédé de communication téléphonique entre un terminal appelant (1) et un terminal appelé (2), permettant la réalisation de communication en temps réel via un premier réseau de communication (3) fonctionnant en temps réel,
caractérisé en ce qu'il comprend les étapes suivantes :
- émission (21) d'un signal d'appel (10) du terminal appelant (1) vers le terminal appelé (2) ;
- détection (22) du signal d'appel (10) par le terminal appelé (2) ;
- émission (23) par le terminal appelé (2) d'une signalisation d'état (11) vers le terminal appelant (1), parmi les deux états "communication temps réel", pour un terminal appelé requérant une communication en temps réel,
et "communication temps différé" pour un terminal appelé supportant une communication en temps différé, si le terminal appelé (2) comprend des moyens pour distinguer lesdits états ;
- si l'état est "communication temps réel" ou si l'un desdits terminaux (1, 2) ne comprend pas de moyens pour distinguer lesdits états, mise en oeuvre (25) d'une communication sur ledit premier réseau (3) ;
- sinon :
- construction et stockage temporaire (26) d'un message (9) dans ledit terminal appelant (1);
- émission (27) dudit message (9) vers ledit terminal appelé (1) via un second réseau de communication (4) fonctionnant en temps différé ;
- réception (28), et éventuellement stockage, dudit message (9) par ledit terminal appelé (1).

10. Procédé selon la revendication 9, caractérisé en ce que ladite étape de mise en oeuvre d'une communication sur ledit premier réseau est également effectuée avant et/ou après ladite étape d'émission du message via ledit second réseau.
